# EUROPÄISCHE PATENTSCHRIFT

(11) **EP 3 743 579 B1**
(45) Veröffentlichungstag und Bekanntmachung des Hinweises auf die Patenterteilung: **16.02.2022**
(21) Anmeldenummer: 18752435.0
(22) Anmeldetag: 31.07.2018
(51) Int. Cl.: E05F 11/38, E05F 11/48

(54) **MITNEHMER FÜR EINEN FAHRZEUGFENSTERHEBER UND FAHRZEUGFENSTERHEBER**
DRIVER FOR A VEHICLE WINDOW REGULATOR, AND VEHICLE WINDOW REGULATOR
ENTRAÎNEUR POUR UN LÈVRE-VITRE DE VÉHICULE, ET LÈVRE-VITRE DE VÉHICULE

(30) Priorität: 22.01.2018 DE 102018200925
(43) Veröffentlichungstag der Anmeldung: 02.12.2020
(73) Patentinhaber: Brose Fahrzeugteile SE & Co. Kommanditgesellschaft, Bamberg, 96052 Bamberg (DE)
(72) Erfinder: HAMPEL, Klaus, 96450 Coburg (DE); SALM, Christian, 96052 Bamberg (DE); TAUBMANN, Udo, 06217 Merseburg (DE); WAGNER, Frank, 90431 Nürnberg (DE)
(74) Vertreter: FDST Patentanwälte
(86) Internationale Anmeldenummer: PCT/EP2018/070719
(87) Internationale Veröffentlichungsnummer: WO 2019/141387

(56) Entgegenhaltungen:
- DE-A1-102009 033 466
- DE-A1-102010 043 047

## Beschreibung

Die Erfindung betrifft einen Mitnehmer für einen Fahrzeugfensterheber, aufweisend einen Scheibenhalter zur Befestigung an einer Fensterscheibe, und einen Schienengleiter mit einem Führungsbereich und einem darin einliegenden Gleiteinsatz. Die Erfindung betrifft weiterhin einen Fahrzeugfensterheber für ein Kraftfahrzeug, mit einem solchen Mitnehmer.

Bewegbare Fahrzeugfensterscheiben werden heute üblicherweise durch elektrisch oder elektromotorisch betriebene Stellvorrichtungen als (Fahrzeug-)Fensterheber zwischen einer Schließstellung und einer Öffnungsstellung verfahren. Ein solcher Fensterheber umfasst in der Regel einen (elektrischen) Stellmotor sowie eine den Stellmotor mit der Fensterscheibe verbindende, dies bedeutet kraftübertragungstechnisch koppelnde Stellmechanik, welche einer Kraftfahrzeugtür oder einer Kraftfahrzeugkarosserie zugeordnet sind. Die Stellmechanik ist hierbei mittels mindestens eines Mitnehmers an die zu bewegende Fensterscheibe mechanisch angebunden.

Derartige Mitnehmer sind in der Regel im Bereich einer Unterkante der Fensterscheibe oder im Bereich einer Seitenkante der Fensterscheibe angeordnet. Ein solcher Mitnehmer ist beispielsweise über ein flexibles Zugmittel der Stellmechanik, zum Beispiel in Form eines Seilzuges (Zugseils), verbunden und verstellbar, um die Fensterscheibe entlang des Verstellweges zwischen der Schließstellung und der Öffnungsstellung zu bewegen. Ein derartiger Mitnehmer ist weiterhin beispielsweise mittels eines Schienengleiters an einer Führungsschiene der Stellmechanik verschiebebeweglich geführt.

Aus der DE 10 2010 043047 A1 ist ein Mitnehmer für eine Fensterhebervorrichtung bekannt, welcher eine Gleitvorrichtung aufweist, die dazu ausgebildet und vorgesehen ist, entlang einer Führungsschiene der Fensterhebervorrichtung verfahren zu werden. Der Mitnehmer weist weiterhin eine Scheibenhaltervorrichtung auf, welche dazu ausgebildet und vorgesehen ist, mit einer Fensterscheibe verbunden zu werden, die mittels der Fensterhebervorrichtung verfahren werden kann. Die Scheibenhaltervorrichtung ist hierbei derart mit der Gleitvorrichtung verbunden, dass im montierten Zustand des Mitnehmers die Scheibenhaltervorrichtung relativ zur Gleitvorrichtung um eine Schwenkachse verschwenkbar ist.

In der DE 10 2009 033466 A1 ist ein Mitnehmer für eine Verstellvorrichtung eines Kraftfahrzeugs beschrieben. Der Mitnehmer weist einen Aufnahmeabschnitt zur Befestigung eines Verstellteils an dem Mitnehmer und einen Kopplungsabschnitt zur Verbindung des Mitnehmers mit einer Antriebsvorrichtung der Verstellvorrichtung auf. Der Mitnehmer weist weiterhin ein erstes Mitnehmerteil und ein zweites Mitnehmerteil auf, wobei der Aufnahmeabschnitt an dem ersten Mitnehmerteil und der Kopplungsabschnitt an dem zweiten Mitnehmerteil angeordnet ist, wobei das zweite Mitnehmerteil in einem Vormontagezustand entlang einer Verstellrichtung, entlang derer der Mitnehmer an einer Führungsschiene geführt ist, relativ zum ersten Mitnehmerteil verschiebbar und dazu über eine Schiene an dem ersten Mitnehmerteil gelagert ist, und in einem Endmontagezustand formschlüssig oder stoffschlüssig mit dem ersten Mitnehmerteil verbunden ist.

Der Erfindung liegt die Aufgabe zugrunde, einen besonders geeigneten Mitnehmer für einen Fahrzeugfensterheber anzugeben. Insbesondere soll eine besonders einfache und stabile Befestigung eines Scheibenhalters und eines Schienengleiters angegeben werden. Der Erfindung liegt weiterhin die Aufgabe zugrunde, einen besonders geeigneten Fahrzeugfensterheber mit einem solchen Mitnehmer anzugeben.

Hinsichtlich des Mitnehmers wird die Aufgabe mit den Merkmalen des Anspruchs 1 und hinsichtlich des Fahrzeugfensterhebers mit den Merkmalen des Anspruchs 10 erfindungsgemäß gelöst. Vorteilhafte Ausgestaltungen und Weiterbildungen sind Gegenstand der Unteransprüche. Die im Hinblick auf den Mitnehmer angeführten Vorteile und bevorzugten Ausgestaltungen sind sinngemäß auch auf den Fahrzeugfensterheber übertragbar und umgekehrt.

Der erfindungsgemäße Mitnehmer ist für einen Fahrzeugfensterheber eines Kraftfahrzeugs geeignet und eingerichtet. Der Mitnehmer weist hierbei einen Scheibenhalter zur insbesondere klemmenden Befestigung an einer Fensterscheibe, und einen Schienengleiter zur Kopplung an eine (Ver-)Stellmechanik des Fahrzeugfensterhebers auf. Der Schienengleiter weist einen Führungsbereich als Schienenumgriff für eine Führungsschiene der Stellmechanik auf. In den Führungsbereich ist hierbei ein Gleiteinsatz zur verbesserten Führung an der Führungsschiene eingelegt oder eingesetzt.

Der Scheibenhalter ist als ein Grundkörper oder Mitnehmerkörper ausgeführt, welcher einen insbesondere einstückig, also einteilig oder monolithisch angeformten, etwa zylindrischen Verbindungsabschnitt aufweist. Der Verbindungsabschnitt ist entlang einer als Axialrichtung bezeichneten Längsrichtung des Verbindungsabschnitts in einen Halterabschnitt des Schienengleiters eingesetzt, und von diesem zumindest abschnittsweise entlang einer Umfangsrichtung (Tangentialrichtung, Azimutalrichtung) eingefasst. Insbesondere ist hierbei mehr als die Hälfte des Außenumfangs des Verbindungsabschnitts von dem Halterabschnitt umgriffen. Im Querschnitt ist somit insbesondere eine Scharniergelenksform gebildet, wobei der Verbindungsabschnitt im Wesentlichen als ein Gelenkkopf und der Halterabschnitt im Wesentlichen als eine Gelenkpfanne ausgebildet sind, und wobei zwischen dem Schienengleiter und dem Scheibenhalter eine starre, also unbewegliche oder ungelenkige, Verbindung ausgebildet ist. Mit anderen Worten sind der Schienengleiter und der Scheibenhalter vorzugsweise formschlüssig entlang der Umfangsrichtung und entlang einer Radialrichtung miteinander gefügt, wobei der Verbindungsabschnitt entlang der Axialrichtung in den Halterabschnitt eingesteckt ist.

Der Halterabschnitt weist eine Durchgangsöffnung auf, welche entlang der Radialrichtung fluchtend zu einer Aufnahme des Verbindungsabschnitts angeordnet ist. Dies bedeutet, dass die Durchgangsöffnung des Halterabschnitts in die Aufnahme des Verbindungsabschnitts mündet. Die Durchgangsöffnung des Halterabschnitts ist beispielsweise als ein Loch ausgebildet, wobei die Aufnahme des Verbindungsabschnitts beispielsweise nach Art eines Sacklochs oder einer Aussparung im Körper des Verbindungsabschnitts ausgeführt ist.

In die miteinander fluchtenden Durchgangsöffnung und Aufnahme ist erfindungsgemäß ein zylindrischer oder bolzenförmiger oder tonnenförmiger Fügestift eingesetzt oder eingepresst. Mit anderen Worten greift der Fügestift zumindest abschnittsweise über die Durchgangsöffnung in die Aufnahme ein, die Durchgangsöffnung ist also von dem Fügestift durchsetzt. Der eingesetzte Fügestift ist somit entlang seines Außenumfangs zumindest abschnittsweise von der Aufnahme eingefasst.

Der Fügestift sitzt somit gleichzeitig in der Durchgangsöffnung des Halterabschnitts und in der Aufnahme des Verbindungsabschnitts ein, so dass eine gegenseitige Bewegung des Halterabschnitts und des Verbindungsabschnitts entlang der Axialrichtung gesperrt oder blockiert ist. Dadurch ist mittels des radialen Fügestifts ein zusätzlicher Formschluss entlang der Axialrichtung zwischen dem Verbindungsabschnitts und dem Halterabschnitt realisiert.

Des Weiteren wird durch den Fügestift somit während der Montage des Mitnehmers, bei welcher der Scheibenhalter an dem Schienengleiter befestigt wird, eine Zentrierung des Verbindungsabschnitts und des Halterabschnitts bewirkt, wodurch die Positions- und Ausrichtegenauigkeit bei der Montage des Mitnehmers wesentlich verbessert wird.

Dadurch ist ein besonders geeigneter Mitnehmer realisiert. Insbesondere ist somit eine aufwands- und bauteilreduzierte Montage des Mitnehmers realisiert, wodurch der Mitnehmer besonders einfach und kostengünstig herstellbar ist. Zwischen dem Verbindungsabschnitt des Scheibenhalters und dem Halterabschnitt des Schienengleiters ist somit vorzugsweise entlang jeder Richtung ein betriebssicherer Formschluss gewährleistet.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Der Formschluss entlang der Radial- und Umfangsrichtung erfolgt hierbei durch das unmittelbare axiale Ineinandergreifen des Verbindungsabschnittes des Scheibenhalters in den Halterabschnitt des Schienengleiters. Der Fügestift ist senkrecht zur Fügerichtung (Axialrichtung) des Verbindungsabschnitts und des Halterabschnitts orientiert. Der Formschluss hinsichtlich der Axialrichtung wird somit mittelbar durch das Eingreifen des Fügestifts in die Durchgangsöffnung und Aufnahme realisiert. Dadurch ist eine mechanisch feste und zuverlässige Befestigung des Schienengleiters und des Scheibenhalters bewirkt, wodurch ein besonders stabiler Mitnehmer gebildet ist.

Durch die senkrechte Ausrichtung des Fügestifts bezüglich der Fügerichtung des Verbindungsabschnitts und des Halterabschnitts ist weiterhin eine besonders bauraumkompakte Befestigung realisiert. Dadurch wird der Bauraumbedarf des Mitnehmers reduziert, was insbesondere hinsichtlich einer bestimmungsgemäßen Einbausituation in einer Kraftfahrzeugtür oder Kraftfahrzeugkarosserie vorteilhaft ist.

Der Scheibenhalter ist in einer geeigneten Ausführungsform als ein im Querschnitt etwa U-förmiges Klemmteil ausgebildet, welches die Fensterscheibe im Einbauzustand zwischen den beiden vertikalen U-Schenkeln klemmend, also zerstörungsfrei, befestigt. Der Verbindungsabschnitt des Scheibenhalters ist hierbei insbesondere als der horizontale U-Schenkel ausgebildet, wobei die Axialrichtung senkrecht zu der Querschnittsebene gerichtet ist.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation in einer Seitentür des Kraftfahrzeugs angegeben. Die Abszissenachse (X-Achse) ist hierbei entlang der Fahrzeuglängsrichtung (Fahrrichtung) und die Ordinatenachse (Y-Achse) entlang der Fahrzeugquerrichtung sowie die Applikatenachse (Z-Achse) entlang der Fahrzeughöhe orientiert. Die Axialrichtung ist somit im Wesentlichen parallel zur Abszissenachse (X) orientiert, wobei die Radialrichtung des Fügestifts vorzugsweise im Wesentlichen parallel zur Ordinatenachse (Y) ausgerichtet ist.

In einer zweckmäßigen Ausführungsform ist der Schienengleiter aus einem mechanisch stabilen Kunststoffmaterial ausgeführt, so dass die im Betrieb einwirkenden Stellkräfte der Stellmechanik sicher und zuverlässig übertragbar sind. Der Schienengleiter ist hierbei beispielsweise aus einem Polyamid (PA), insbesondere aus einem glasfaserverstärkten Polyamid (PA-GF), beispielsweise mit einem Glasfaseranteil von etwa 35%, ausgeführt.

Zur zuverlässigen Klemmung der Fensterscheibe ist der Scheibenhalter geeigneterweise aus einem zumindest teilweise biegeflexiblen oder biegeelastischen Kunststoffmaterial, beispielsweise aus einem Polypropylen (PP), insbesondere aus einem glasfaserverstärkten Polypropylen (PP-GF), beispielsweise mit einem Glasfaseranteil von etwa 30%, hergestellt.

Der Gleiteinsatz ist als ein Kunststoffteil mit besonders guten Gleiteigenschaften, also mit einem möglichst geringen Reibungswiderstand bezüglich der Führung an der Führungsschiene, ausgeführt. Dadurch ist eine im Wesentlichen widerstandsfreie Führung des Mitnehmers entlang der Führungsschiene der Stellmechanik gewährleistet. Der Gleiteinsatz ist hierbei beispielsweise aus einem Polyoxymethylen (POM) hergestellt. Alternativ sind zumindest die an der Führungsschiene anliegenden oder anlegbaren Laufflächen des Gleiteinsatzes mit einem solchen Kunststoff versehen oder beschichtet.

Der Scheibenhalter und der Schienengleiter sowie der Gleiteinsatz sind hierbei vorzugsweise jeweils als Spritzgussteile ausgeführt. Dadurch ist eine besonders kostengünstige und aufwandsreduzierte Herstellung des Mitnehmers gewährleistet.

In einer vorteilhaften Weiterbildung ist der Fügestift aus einem gummielastischen, also aus einem weichen, verformelastischen Material hergestellt. Durch die somit realisierte Verformbarkeit wird bei einem Einsetzen oder Einpressen des Fügestifts zusätzlich zum Formschluss und zur Zentrierung des Verbindungsabschnitts und des Halterabschnitts auch zumindest ein gewisser Toleranzausgleich zwischen dem Verbindungsabschnitt und dem Halterabschnitts zueinander ermöglicht.

Der Durchmesser des Fügestifts kann hierbei zumindest ein gewisses Übermaß bezüglich der lichten Weite oder des Durchmessers der Durchgangsöffnung und/oder der Aufnahme aufweisen, so dass der Fügestift bei einem Einsetzen oder Einpressen in die Durchgangsöffnung und/oder Aufnahme bezüglich seiner Radialrichtung zumindest teilweise verformt wird. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Aufgrund der durch diese Verformung bewirkten (radialen) Rückstellkräfte wird der Fügestift in der Durchgangsöffnung und/oder in der Aufnahme geklemmt. Mit anderen Worten sitzt der Fügestift kraftschlüssig in dem Verbindungsabschnitt und/- oder dem Halterabschnitt ein. Dadurch wird ein unerwünschtes Herausgleiten des Fügestifts aus der Durchgangsöffnung und/oder der Aufnahme, also ein unerwünschtes (Auf-)Lösen des (axialen) Formschlusses, vorteilhaft und konstruktiv einfach vermieden. Somit ist eine besonders stabile und betriebssichere Befestigung des Verbindungsabschnitts und des Halterabschnitts realisiert. Dadurch fügt der Fügestift den Scheibenhalter und den Schienengleiter sowohl formschlüssig als auch kraftschlüssig.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (d.h. diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

In einer besonders bauraumkompakten Ausgestaltung ist der Fügestift senkrecht zu einer Längsrichtung des Gleiteinsatzes orientiert. Die Längsrichtung des Gleiteinsatzes ist im Wesentlichen entlang einer Schienenlängsrichtung der Führungsschiene orientiert, und verläuft beispielsweise schräg oder geneigt zu der Abszissenachse (X) und schräg oder geneigt zu der Applikatenachse (Z). Der Gleiteinsatz ist somit etwa windschief zur Axialrichtung des Verbindungsabschnitts und des Halterabschnitts angeordnet.

In einer geeigneten Ausbildung ist der Fügestift von dem Gleiteinsatz zumindest teilweise abgedeckt. Dadurch wird durch den Gleiteinsatz einem ungewünschten Herausgleiten des Fügestifts aus der Durchgangsöffnung und/oder der Aufnahme im Betrieb des Mitnehmers oder Fensterhebers vorteilhaft und konstruktiv einfach entgegengewirkt. Dadurch ist der axiale Formschluss hinsichtlich der Betriebssicherheit und Zuverlässigkeit weiter verbessert.

In einer denkbaren Ausführung weist der Fügestift entlang der Radialrichtung des Verbindungsabschnitts und Halterabschnitts ein Übermaß auf, und ragt hierbei aus der Durchgangsöffnung des Schienengleiters heraus. Mit anderen Worten ist der Fügestift entlang seiner Längsrichtung derart bemessen, dass er im eingesetzten Zustand zumindest teilweise der Durchgangsöffnung des Schienengleiters übersteht. Dies bedeutet, dass der Fügestift zumindest abschnittsweise dem Schienengleiter im Führungsbereich emporsteht. Dadurch ist im Falle einer Wartung oder Reparatur des Mitnehmers ein einfacher Zugang zu dem Fügestift ermöglicht, wodurch eine einfache Demontage des Mitnehmers gewährleistet ist.

In einer besonders zweckmäßigen Ausgestaltung liegt der Fügestift freiendseitig an dem Gleiteinsatz an. Der Fügestift wirkt hierbei eine Vorspannkraft auf den Gleiteinsatz aus. Die Vorspannkraft ist hierbei insbesondere derart gerichtet, dass der Gleiteinsatz im Führungsbereich des Schienengleiters zuverlässig befestigt wird. Durch den Fügestift wird somit auch zumindest ein gewisser Kraftschluss zwischen dem Führungsbereich und dem Gleiteinsatz bewirkt. Dadurch ist eine betriebssichere und zuverlässige Befestigung des Gleiteinsatzes gewährleistet, wodurch eine zuverlässige Führung des Schienengleiters an einer Führungsschiene sichergestellt ist.

In einer bevorzugten Weiterbildung weist der Führungsbereich des Schienengleiters zwei angeformte, zueinander beabstandet angeordnete Führungsklauen auf, wobei der Gleiteinsatz zur Verbesserung der Gleiteigenschaften zwischen den Führungsklauen lösbar klipsbefestigt ist. Dadurch ist eine besonders materialsparende Ausführung des Führungsbereichs des Schienengleiters realisiert.

In einer vorteilhaften Ausgestaltung sind die Durchgangsöffnung und die Aufnahme sowie der darin einsitzende Fügestift entlang der Axialrichtung etwa mittig an dem Verbindungsabschnitt bzw. an dem Halterabschnitt angeordnet. Insbesondere sind die Durchgangsöffnung und die Aufnahme sowie der Fügestift entlang der Axialrichtung etwa mittig zwischen den Führungsklauen des Führungsbereichs angeordnet, so dass die bewirkte Vorspannkraft des Fügestifts etwa mittig oder zentral auf den Gleiteinsatz einwirkt. Dadurch ist eine besonders stabile und zuverlässige Halterung des Gleiteinsatzes am Führungsbereich gewährleistet.

In einer besonders stabilen und verdrehsicheren Ausführung durchsetzt der Fügestift die Aufnahme des Verbindungsabschnitts vollständig. Der Fügestift greift hierbei endseitig in eine Gegenaufnahme des Halterabschnitts ein, welche diametral gegenüberliegend zur Durchgangsöffnung angeordnet ist. Dadurch ist ein besonders sicherer axialer Formschluss realisiert.

In einer bevorzugten Anwendung ist der vorstehend beschriebene Mitnehmer Teil eines Fahrzeugfensterhebers eines Kraftfahrzeugs. Mittels des Fahrzeugfensterhebers wird eine Fensterscheibe des Kraftfahrzeugs zwischen einer Schließstellung und einer Öffnungsstellung bewegt. Der Fahrzeugfensterhebers weist hierbei geeigneterweise einen elektrischen Stellmotor auf, welcher über eine Stellmechanik und mindestens einen Mitnehmer die Fensterscheibe bewegt.

Der mindestens eine Mitnehmer ist im Einbauzustand funktionsgemäß mechanisch fest an die Fensterscheibe, beispielsweise im Bereich einer Unter- oder Seitenkante angebunden. Der Mitnehmer ist mittels des Schienengleiters linear verschiebebeweglich an einer Führungsschiene geführt. Dadurch wird bei einer Bewegung des Schienengleiters entlang der Führungsschiene die Fensterscheibe zwischen der Schließstellung und der Öffnungsstellung mit bewegt.

Nachfolgend ist ein Ausführungsbeispiel der Erfindung anhand einer Zeichnung näher erläutert. Darin zeigen:
- Fig. 1: in schematischer Darstellung einen Fahrzeugfensterheber mit einem Stellmotor und mit einer Stellmechanik sowie mit einen die Stellmechanik und eine Fensterscheibe koppelnden Mitnehmer,
- Fig. 2: in perspektivischer Darstellung des Mitnehmers mit einem Scheibenhalter und mit einem Schienengleiter,
- Fig. 3: in perspektivischer Darstellung ausschnittsweise den Mitnehmer und die Fensterscheibe,
- Fig. 4: in Draufsicht den Mitnehmer und die Fensterscheibe,
- Fig. 5: in Schnittdarstellung mit Blick auf die Schnittebene den Mitnehmer und die Fensterscheibe,
- Fig. 6: in perspektivischer Darstellung mit Blick auf einen Führungsbereich den Scheibenhalter und den Schienengleiter mit einem diese verbindenden Fügestift, und
- Fig. 7: in Schnittdarstellung ausschnittsweise den Führungsbereich.

Einander entsprechende Teile und Größen sind in allen Figuren stets mit den gleichen Bezugszeichen versehen.

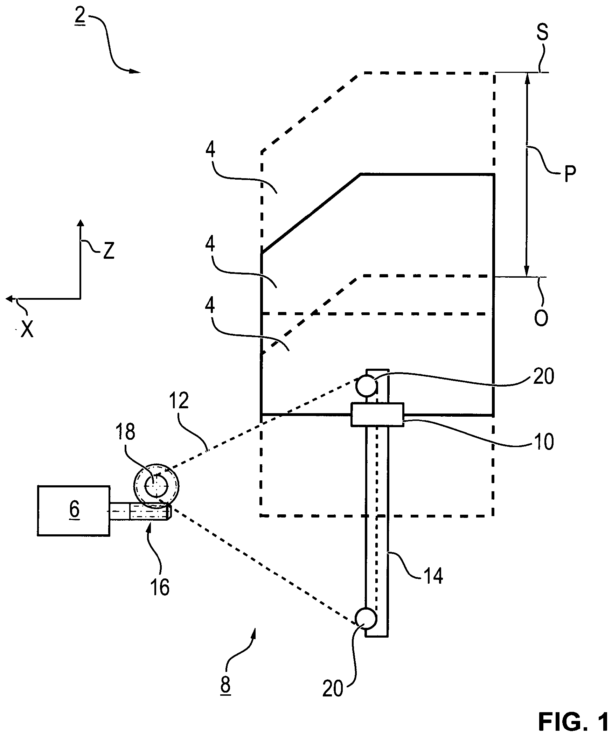

In der Fig. 1 ist in vereinfachter und schematischer Darstellung ein elektrischer Fahrzeugfensterheber 2 als Stellvorrichtung für eine (Fahrzeug-)Fensterscheibe 4 eines Kraftfahrzeugs gezeigt. Der (Fahrzeug-)Fensterheber 2 weist einen Stellmotor 6 auf, welcher mittels einer Stellmechanik 8 und einem Mitnehmer 10 auf die Fensterscheibe 4 wirkt. Der Fensterheber 2 ist beispielsweise in einer rahmenlosen Fahrzeugtür des Kraftfahrzeugs angeordnet.

In dem gezeigten Ausführungsbeispiel ist die Stellmechanik 8 nach Art eines doppelt geführten Seilfensterhebers ausgeführt. Die Stellmechanik 8 weist hierbei einen Seilzug 12 und eine Führungsschiene 14 für den Mitnehmer 10 auf.

Der Stellmotor 6 des Fensterhebers 2 treibt über ein Schnecken- oder Stirnradgetriebe 16 eine Seiltrommel 18 der Stellmechanik 8 an. Ein Zugseil des Seilzugs 12 ist derart an der Seiltrommel 18 angeordnet, dass bei durch das Getriebe 16 bewirkten Drehungen der Seiltrommel 18 ein Auf- und Abwickeln des Zugseils erfolgt. Der beispielsweise als Bowdenzug ausgeführte Seilzug 12 bewegt über Umlenkrollen 20 der Führungsschiene 14 das Fenster 4.

Bei einer Betätigung des Stellmotors 6 wird die Fensterscheibe 4 in ihrer (Scheiben-) Position P verfahren. Die Fensterscheibe 4 ist hierbei reversibel zwischen einer Schließstellung S, welche die höchstmögliche Position P darstellt, und einer Öffnungsstellung O, welche die tiefst mögliche Position P darstellt, verfahrbar. In diesen Stellungen S und O ist die Fensterscheibe 4 in der Fig. 1 jeweils gestrichelt angedeutet. Mit durchgezogenen Linien ist die Fensterscheibe 4 dagegen in einer halbgeöffneten Zwischenstellung dargestellt.

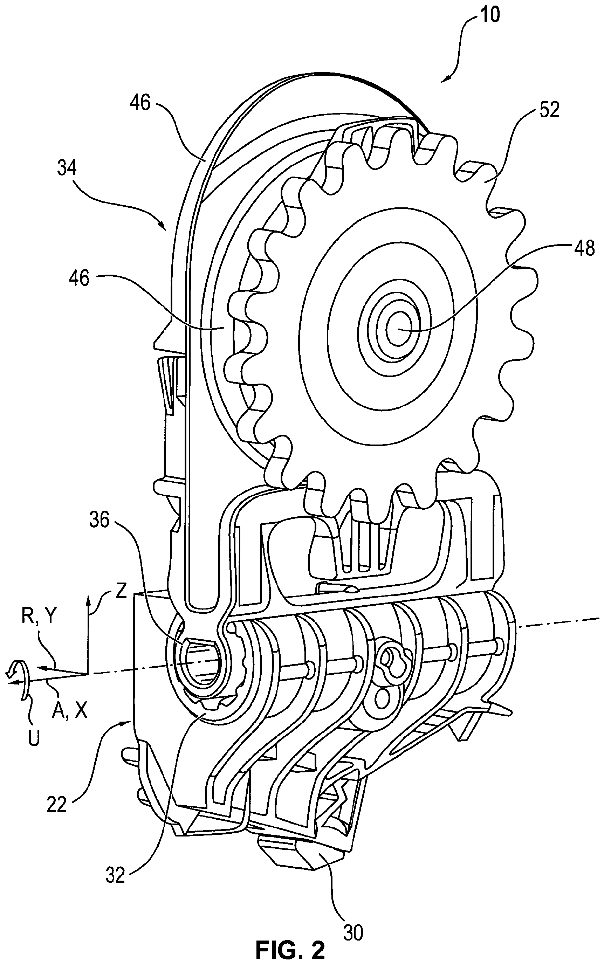

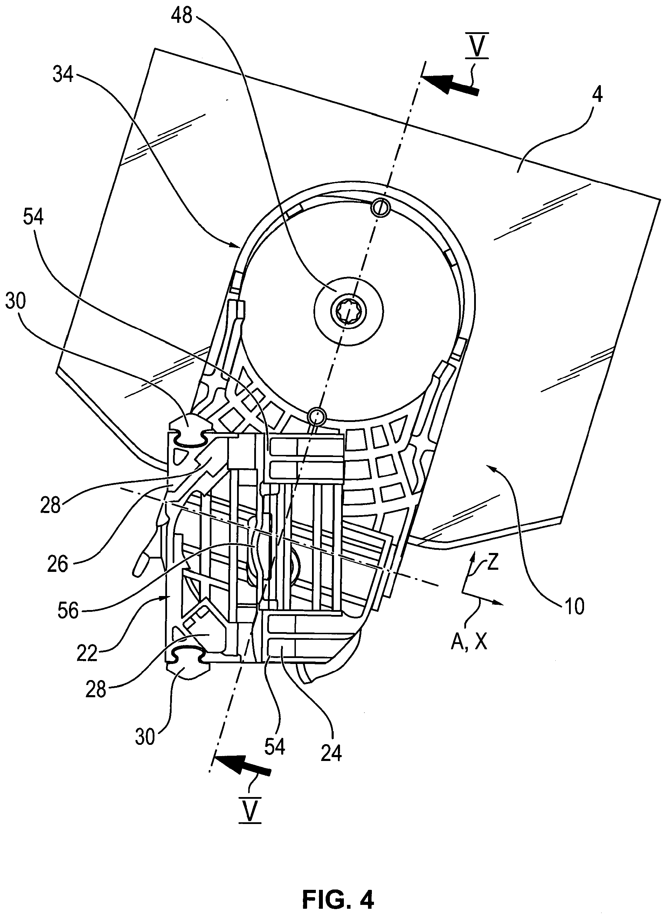

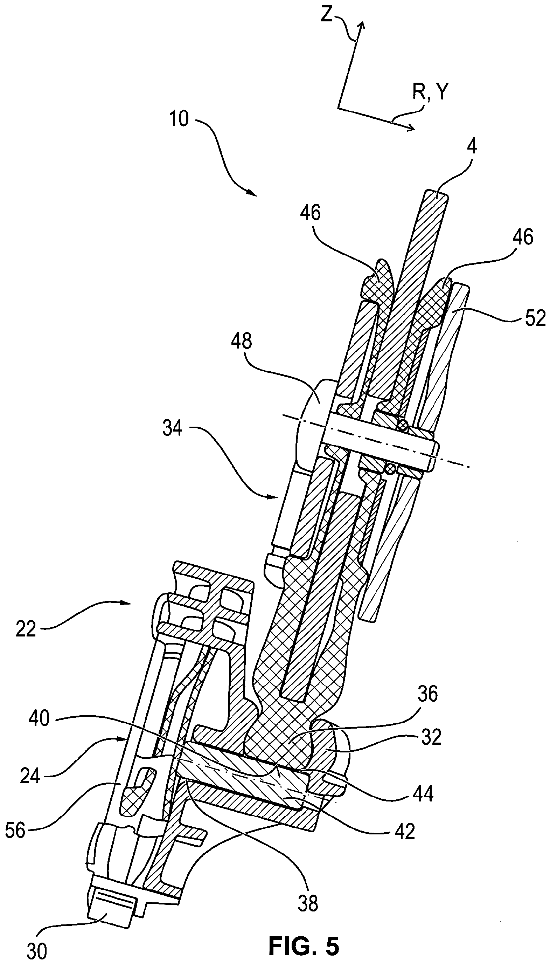

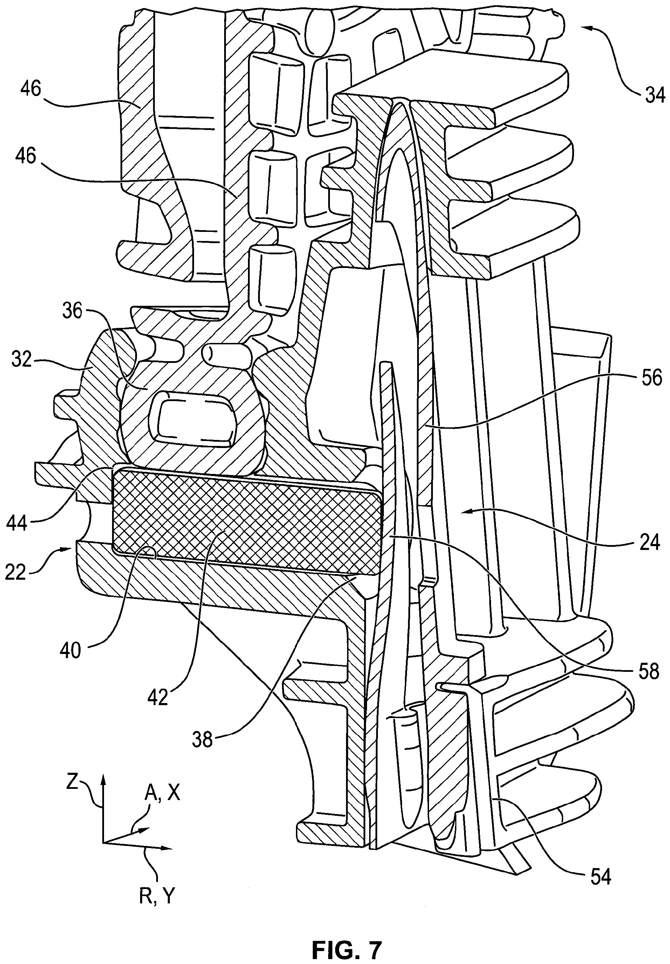

Nachfolgend ist der Aufbau des Mitnehmers 10 anhand der Figuren 2 bis 7 näher erläutert. Die Fig. 5 und die Fig. 7 zeigen hierbei Schnittdarstellungen gemäß der Schnittlinie V-V in der Fig. 4.

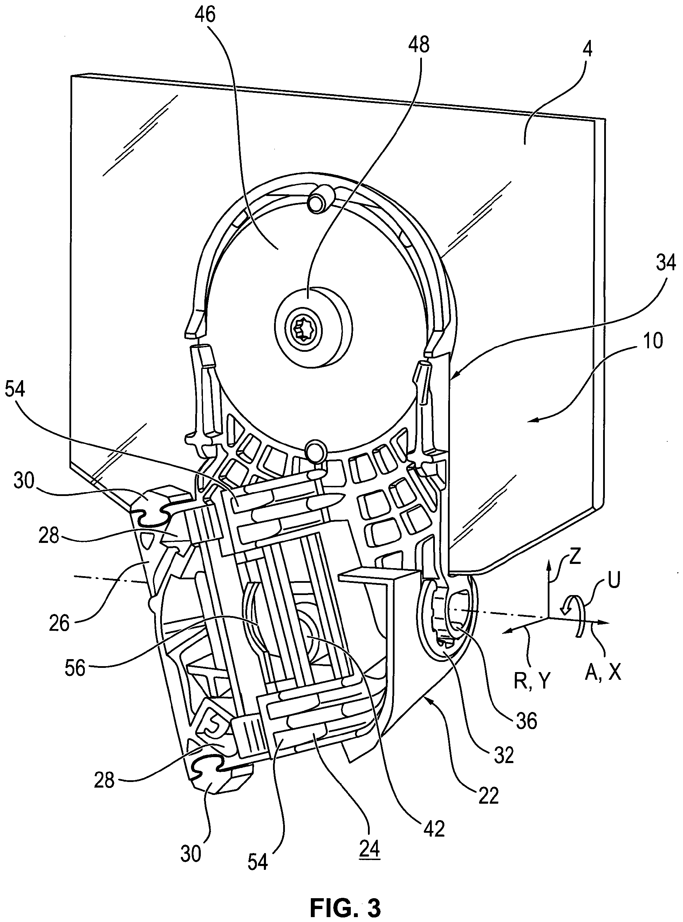

Der Mitnehmer 10 weist einen Schienengleiter 22 auf, an dem ein Führungsbereich 24 (Fig. 3) als Schienenumgriff für die linear bewegbare oder verschiebbare Führung des Mitnehmers 10 an der Führungsschiene 14 des Fensterhebers 2 vorgesehen ist. Der Schienengleiter 22 weist zusätzlich zu dem Führungsbereich 24 einen Befestigungsbereich 26 für die Kopplung und Befestigung mit dem Zugseil des Seilzugs 12 auf.

Der Befestigungsbereich 26 weist zwei Nippelkammern 28 (Fig. 3, Fig. 4, Fig. 5) auf, an denen Seilnippel des Seilzugs 12 eingehängt oder einhängbar sind, so dass eine über den Seilzug übertragene Stellkraft auf den Mitnehmer 10 wirkt, und diesen entlang der Führungsschiene 14 bewegt oder verstellt.

Zur Vorgabe einer Endposition des Mitnehmers 10 in der Schließstellung S und in der Offenstellung O weist der Schienengleiter 22 im Befestigungsbereich 26 zwei befestigte oder befestigbare Anschläge 30 auf, mittels welchen der Mitnehmer 10 an einem jeweiligen Gegenanschlag definiert gestoppt wird. Die nicht näher gezeigten Gegenanschläge sind hierbei beispielsweise an der Führungsschiene 14 oder an einem die Führungsschiene 14 haltenden Trägerbauteil der Kraftfahrzeugtür angebracht. Die Anschläge 30 sind beispielsweise aus einem dämpfenden, gummielastischen Material ausgeführt, so dass ein mechanisch gedämpfter und geräuschreduzierter Anschlag am jeweiligen Gegenanschlag realisiert ist.

Der Schienengleiter 22 des Mitnehmers 10 weist weiterhin einen Halterabschnitt 32 zur Halterung eines Scheibenhalters 34 auf. Mittels des Scheibenhalters 34 ist der Mitnehmer 10 mechanisch fest an die Fensterscheibe 4 gekoppelt oder koppelbar. Der Verbindungsabschnitt 36 ist hierbei insbesondere einstückig, also einteilig oder monolithisch, an den Scheibenhalter 34 angeformt. Der Verbindungsabschnitt 36 ist für die Fixierung des Scheibenhalters 34 an dem Schienengleiter 22 entlang seiner als Axialrichtung A bezeichneten Längsrichtung in den Halterabschnitt 32 des Schienengleiters 22 eingesetzt.

Wie beispielsweise in den Darstellungen der Figuren 2 und 5 ersichtlich ist, ist der Verbindungsabschnitt 35 hierbei abschnittsweise entlang einer Umfangsrichtung (Tangentialrichtung, Azimutalrichtung) U von dem Halterabschnitt 32 eingefasst. Dies bedeutet, dass der Außenumfang des Verbindungsabschnitts 36 im eingesetzten Zustand zumindest abschnittsweise von dem Halterabschnitt 32 formschlüssig umgriffen ist. Wie beispielsweise in der Schnittdarstellung der Fig. 5 erkennbar ist, ist hierbei mehr als die Hälfte des Außenumfangs des Verbindungsabschnitts 36 von dem Halterabschnitt 32 umgriffen.

Der Verbindungsabschnitt 36 und der Halterabschnitt 32 weisen somit im gefügten Zustand eine etwa scharniergelenksartige Querschnittsform auf, wobei der Verbindungsabschnitt 36 im Wesentlichen als ein Gelenkkopf und der Halterabschnitt 32 im Wesentlichen als eine Gelenkpfanne ausgebildet sind. Zwischen dem Schienengleiter 22 und dem Scheibenhalter 34 ist eine starre, also unbewegliche oder ungelenkige, Verbindung ausgebildet. Dadurch sind der Schienengleiter 22 und der Scheibenhalter 34 formschlüssig entlang der Umfangsrichtung U und entlang einer hierzu senkrecht orientierten Radialrichtung R miteinander gefügt, wobei der Verbindungsabschnitt 36 entlang der Axialrichtung in den Halterabschnitt 32 eingesteckt ist.

Nachfolgend sind Angaben hinsichtlich der Raumrichtungen auch in einem Koordinatensystem des Kraftfahrzeugs (Fahrzeugkoordinatensystem) bezüglich der beispielhaften Einbausituation in einer Seitentür des Kraftfahrzeugs angegeben. Die Abszissenachse (X-Achse) ist hierbei entlang der Fahrzeuglängsrichtung und die Ordinatenachse (Y-Achse) entlang der Fahrzeugquerrichtung sowie die Applikatenachse (Z-Achse) entlang der Fahrzeughöhe orientiert. Die Axialrichtung A ist hierbei parallel zur Abszissenachse (X) orientiert, wobei die Radialrichtung R im Wesentlichen parallel zur Ordinatenachse (Y) ausgerichtet ist.

Der einstückig an den Schienengleiter 22 angeformte Halterabschnitt 32 weist eine lochartige Durchgangsöffnung 38 auf, welche entlang der Radialrichtung R fluchtend zu einer Aufnahme 40 des Verbindungsabschnitts 36 angeordnet ist. Die Durchgangsöffnung 38 des Halterabschnitts 32 mündet somit koaxial in die Aufnahme 40 des Verbindungsabschnitts 36.

In die Durchgangsöffnung 38 und die Aufnahme 40 ist ein zylindrischer oder bolzenförmiger oder tonnenförmiger Fügestift 42 eingesetzt oder eingepresst. Der entlang der Radialrichtung R oder Y-Richtung orientierte Fügestift 42 ist hierbei entlang seines Außenumfangs zumindest abschnittsweise von der Aufnahme 40 eingefasst. Dadurch bewirkt der radiale Fügestift 42 einen zusätzlichen Formschluss zwischen dem Verbindungsabschnitts 36 und dem Halterabschnitt 32 entlang der Axialrichtung A oder X-Richtung.

Der Formschluss entlang der Radialrichtung R und der Umfangsrichtung U erfolgt hierbei durch das unmittelbare axiale Ineinandergreifen des Verbindungsabschnittes 36 des Scheibenhalters 34 in den Halterabschnitt 32 des Schienengleiters 22. Der Fügestift 42 ist senkrecht zur Fügerichtung (Axialrichtung A) des Verbindungsabschnitts 36 und des Halterabschnitts 32 orientiert. Der Formschluss hinsichtlich der Axialrichtung A wird somit mittelbar durch das Eingreifen des Fügestifts 42 in die Durchgangsöffnung 38 und in die Aufnahme 40 realisiert.

Im Zuge der Montage des Mitnehmers 10, bei welcher der Schienengleiter 22 mit dem Scheibenhalter 34 gefügt wird, wirkt der Fügestift 42 als eine Zentrierhilfe bei der insbesondere axialen Positionierung des Verbindungsabschnitts 36 zum Halterabschnitt 32.

Der Fügestift 42 ist aus einem gummielastischen, also aus einem weichen, verformelastischen Material hergestellt. Durch die Verformbarkeit des Fügestifts 42 wird somit im Zuge der Montage auch ein gewisser (axialer) Toleranzausgleich zwischen dem Verbindungsabschnitt 36 und dem Halterabschnitt 32 ermöglicht.

Wie insbesondere in den Schnittdarstellungen der Fig. 5 und Fig. 7 ersichtlich ist, durchsetzt der Fügestift 42 die Aufnahme 40 des Verbindungsabschnitts 36 vollständig. Der Fügestift 42 greift endseitig in eine Gegenaufnahme 44 des Halterabschnitts 32 ein, welche diametral gegenüberliegend zur Durchgangsöffnung 38 angeordnet ist. Die Durchgangsöffnung 38 und die Gegenaufnahme 44 sind hierbei gemeinsam als eine etwa sacklochartige Bohrung oder Senkung oder Aussparung des Halterabschnitts 32 entlang der Radialrichtung R bzw. Y-Richtung ausgeführt, wobei die Gegenaufnahme 44 als ein radialer Anschlag für den Fügestift 42 ausgebildet ist.

Die Aufnahme 40 ist beispielsweise als eine Aussparung des Verbindungsabschnitts 36 ausgeführt, welche in der XZ-Ebene, also der senkrecht zum Fügestift 42 orientierten Ebene, eine etwa U-Förmige Querschnittsform aufweist. Der Außenumfang des Fügestifts 42 ist somit lediglich teilweise von der Aufnahme 40 umgriffen. Vorzugsweise ist zumindest eine Hälfte des Außenumfangs des Fügestifts 42 von der Aufnahme 40 eingefasst. Alternativ ist es beispielsweise ebenso möglich, dass die Aufnahme 40 umfangsseitig geschlossen ausgeführt ist, also dass die Aufnahme 40 als eine im Wesentlichen zylinderförmige Aussparung in dem Verbindungsabschnitt 36 eingebracht ist.

Der Durchmesser des Fügestifts 42 weist zumindest ein gewisses Übermaß bezüglich der lichten Weite oder des Durchmessers der Durchgangsöffnung 38 und/oder der Aufnahme 40 und/oder der Gegenaufnahme 44 auf. Dadurch wird der Fügestift 42 bei einem Einsetzen oder Einpressen in die Durchgangsöffnung 38 und/oder in die Aufnahme 40 und/oder in die Gegenaufnahme 44 bezüglich seiner Radialrichtung zumindest teilweise verformt. Die dadurch bewirkten Rückstellkräfte klemmen den Fügestift 42 kraftschlüssig in der Durchgangsöffnung 38 und/oder in der Aufnahme 40 und/oder in der Gegenaufnahme 44. Der Fügestift 42 wird also insbesondere kraftschlüssig in den Verbindungsabschnitt 36 und/oder den Halterabschnitt 32 eingepresst. Dadurch wird ein ungewünschtes Herausgleiten des Fügestifts 42 vermieden, wodurch ein besonders zuverlässiger Form- und Kraftschluss zwischen dem Halterabschnitt 32 und dem Verbindungsabschnitt 36 realisiert ist.

Der Scheibenhalter 34 weist in der YZ-Ebene eine etwa U-förmige Querschnittsform auf. Der vertikale U-Schenkel ist hierbei durch den axialen, also entlang der X-Richtung orientierten, Verbindungsabschnitt 36 gebildet, wobei die zwei vertikalen U-Schenkel als Klemmschenkel 46 für eine insbesondere formschlüssige und klemmende Verbindung oder Anbindung des Mitnehmers 10 an die Fensterscheibe 4 ausgebildet sind.

Zwischen den Klemmschenkeln 46 ist ein nicht näher bezeichneter Aufnahmespalt gebildet, in welchen ein Abschnitt der Fensterscheibe 4 im Bereich einer Scheibenunterkante bestimmungsgemäß einführbar ist. Im Einbauzustand (vgl. Fig. 3 bis Fig. 5) ist die Fensterscheibe 4 somit abschnittsweise zwischen den beiden Klemmschenkeln 46 angeordnet.

Zum Zwecke einer zuverlässigen und betriebssicheren Klemmung oder Anbindung an die Fensterscheibe 4 weist der Scheibenhalter 34 ein Befestigungselement 48 auf. Das Befestigungselement 48 ist beispielsweise als eine Schraube ausgebildet. Das Befestigungselement 48 ist hierbei in jeweils eine Gewindebohrung 50 der Klemmschenkel 46 eingedreht, so dass bei einer Bewegung des Befestigungselements 48 die Klemmschenkel 46 relativ zueinander bewegbar sind. Das Befestigungselement 48 ist zur erleichterten Betätigung beispielsweise drehfest mit einem Schraubrad 52 gekoppelt.

Der Führungsbereich 24 des Schienengleiters 22 weist zwei angeformte, zueinander beabstandet angeordnete Führungsklauen 54 zum Umgreifen der Führungsschiene 14 auf. Zwischen den Führungsklauen 54 ist ein einklipsbarer oder eingeklipster Gleiteinsatz 56 lösbar befestigt, welcher als Anlage- oder Lauffläche an der Führungsschiene 14 anliegt. Der Gleiteinsatz 56 ist als ein Kunststoffteil mit besonders guten Gleiteigenschaften, also mit einem möglichst geringen Reibungswiderstand bezüglich der Führung an der Führungsschiene 14, ausgeführt.

Die Längsrichtung des Gleiteinsatzes 56 zwischen den Führungsklauen 54 ist entlang einer Schienenlängsrichtung der Führungsschiene 14 orientiert, und verläuft in dem dargestellten Ausführungsbeispiel im Einbauzustand etwa schräg oder geneigt zu der X-Achse und der Z-Achse. Der Gleiteinsatz 56 ist somit etwa windschief zur Axialrichtung A des Verbindungsabschnitts 36 und des Halterabschnitts 32 orientiert. Dies bedeutet, dass der Fügestift 42 senkrecht zu der Längsrichtung des Gleiteinsatzes 56 orientiert ist.

Der Fügestift 42 ist im eingeklipsten Zustand des Gleiteinsatzes 56 von diesem zumindest teilweise abgedeckt. Dadurch verhindert der Gleiteinsatz 56 ein ungewünschtes Herausgleiten des Fügestifts 42 aus der Durchgangsöffnung 38 und/oder aus der Aufnahme 40 und/oder aus der Gegenaufnahme 44.

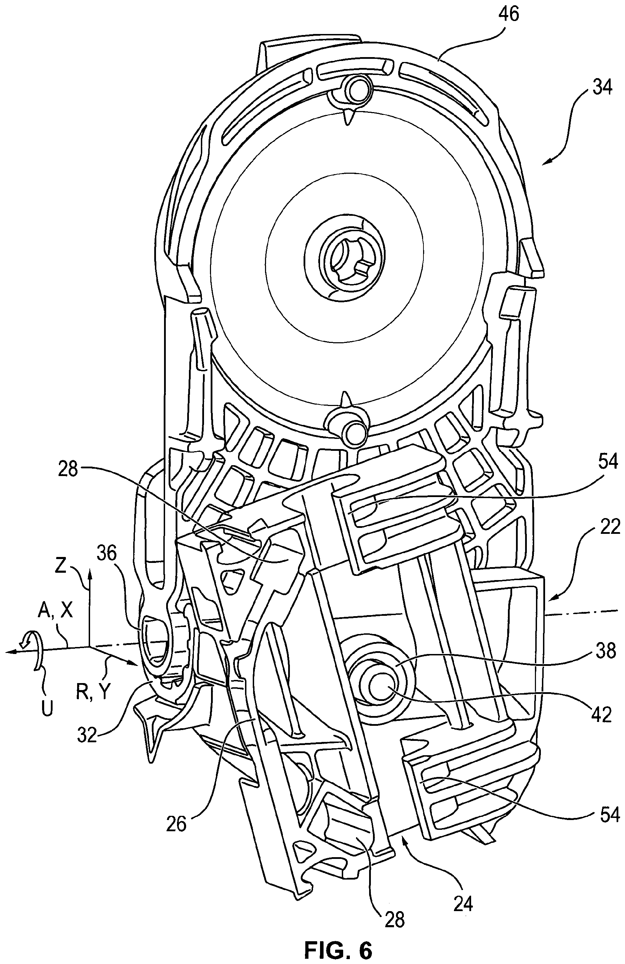

Wie insbesondere in den Figuren 6 und 7 ersichtlich ist, weist der Fügestift 42 entlang der Radialrichtung R oder der Y-Richtung ein Übermaß auf. Mit anderen Worten ist der Fügestift 42 entlang seiner Längsrichtung derart bemessen, dass das Freiende des Fügestifts 42 im eingesetzten Zustand zumindest teilweise aus der Durchgangsöffnung 38 des Schienengleiters 22 herausragt. Das Freiende des Fügestifts 42 liegt hierbei an dem Gleiteinsatz 56 an.

Der Fügestift 42 wirkt hierbei eine radial gerichtete Vorspannkraft auf den Gleiteinsatz 56 aus. Mit anderen Worten drückt das Freiende des Fügestifts 42 entlang der Radialrichtung R, also entlang der Y-Richtung, gegen den eingeklipsten Gleiteinsatz 56. Der Gleiteinsatz 56 weist hierbei einen feder- oder biegeelastischen Bodenbereich 58 auf, welcher durch das Freiende zumindest teilweise verformt oder verbogen wird (Fig. 7). Die resultierende Rückstellkraft wirkt als insbesondere radial gerichtete Vorspannkraft zur verbesserten Halterung des Gleiteinsatzes 56 an den Führungsklauen 54. Somit wird durch den Fügestift 42 auch zumindest ein gewisser Kraftschluss zwischen dem Führungsbereich 24 und dem Gleiteinsatz 56 bewirkt.

Die Durchgangsöffnung 38 und die Aufnahme 40 sowie die Gegenaufnahme 44 und der Fügestift 42 sind entlang der Axialrichtung A etwa mittig zwischen den Führungsklauen 54 des Führungsbereichs 24 angeordnet. Dadurch wirkt die Vorspannkraft des Fügestifts 42 etwa mittig oder zentral auf den Gleiteinsatz 56.

In einer geeigneten Ausgestaltung des Mitnehmers 10 sind der Scheibenhalter 34 und der Schienengleiter 22 sowie der Gleiteinsatz 56 jeweils als Spritzgussteile ausgeführt.

Der Schienengleiter 22 ist hierbei aus einem mechanisch stabilen Kunststoffmaterial ausgeführt, so dass die im Betrieb einwirkenden Stellkräfte der Stellmechanik 8 sicher und zuverlässig geführt werden. Der Schienengleiter 22 ist beispielsweise aus einem Polyamid (PA), insbesondere aus einem glasfaserverstärkten Polyamid (PA-GF), beispielsweise mit einem Glasfaseranteil von etwa 35%, ausgeführt. Zur zuverlässigen Klemmung der Fensterscheibe ist der Scheibenhalter 34 geeigneterweise aus einem zumindest teilweise biegeflexiblen oder biegeelastischen Kunststoffmaterial, beispielsweise aus einem Polypropylen (PP), insbesondere aus einem glasfaserverstärkten Polypropylen (PP-GF), beispielsweise mit einem Glasfaseranteil von etwa 30%, hergestellt.

Der Gleiteinsatz 56 ist beispielsweise aus einem Polyoxymethylen (POM) hergestellt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung, wie er durch die folgenden Ansprüche definiert wird, zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen, falls diese Kombinationen durch die folgenden Ansprüche definiert sind.

### Bezugszeichenliste

- 2: Fahrzeugfensterheber
- 4: Fensterscheibe
- 6: Stellmotor
- 8: Stellmechanik
- 10: Mitnehmer
- 12: Seilzug
- 14: Führungsschiene
- 16: Schnecken-/Stirnradgetriebe
- 18: Seiltrommel
- 20: Umlenkrolle
- 22: Schienengleiter
- 24: Führungsbereich
- 26: Befestigungsbereich
- 28: Nippelkammer
- 30: Anschlag
- 32: Halterabschnitt
- 34: Scheibenhalter
- 36: Verbindungsabschnitt
- 38: Durchgangsöffnung
- 40: Aufnahme
- 42: Fügestift
- 44: Gegenaufnahme
- 46: Klemmschenkel
- 48: Befestigungselement
- 50: Gewindebohrung
- 52: Schraubrad
- 54: Führungsklaue
- 56: Gleiteinsatz
- 58: Bodenbereich

- P: Scheibenposition

- S: Schließstellung
- O: Öffnungsstellung
- A: Axialrichtung
- U: Umfangsrichtung
- R: Radialrichtung
- X,Y,Z: Raumrichtung

## Patentansprüche

1. Mitnehmer (10) für einen Fahrzeugfensterheber (2), aufweisend einen Scheibenhalter (34) zur Befestigung an einer Fensterscheibe (4), und einen Schienengleiter (22) mit einem Führungsbereich (24) als Schienenumgriff für eine Führungsschiene (14) einer Stellmechanik (8) des Fahrzeugfensterhebers (2), wobei der Scheibenhalter (34) einen etwa zylindrischen Verbindungsabschnitt (36) aufweist, welcher entlang einer Axialrichtung (A) in einen Halterabschnitt (32) des Schienengleiters (22) eingesetzt und von diesem zumindest abschnittsweise entlang einer Umfangsrichtung (U) eingefasst ist,
**dadurch gekennzeichnet,**
- **dass** in dem Führungsbereich (24) ein Gleiteinsatz (56) einliegt,
- **dass** der Verbindungsabschnitt (36) eine Aufnahme (40) und der Halterabschnitt (32) eine Durchgangsöffnung (38) aufweisen, welche entlang einer Radialrichtung (R) fluchtend zueinander angeordnet sind, und
- **dass** ein Fügestift (42) in die Durchgangsöffnung (38) und die Aufnahme (40) eingesetzt ist.

2. Mitnehmer (10) nach Anspruch 1,
**dadurch gekennzeichnet,**
**dass** der Fügestift (42) aus einem gummielastischen Material hergestellt ist.

3. Mitnehmer (10) nach Anspruch 1 oder 2,
**dadurch gekennzeichnet,**
**dass** der Fügestift (42) senkrecht zu einer Längsrichtung des Gleiteinsatzes (56) orientiert ist.

4. Mitnehmer (10) nach einem der Ansprüche 1 bis 3,
**dadurch gekennzeichnet,**
**dass** der Fügestift (42) von dem Gleiteinsatz (56) zumindest teilweise abgedeckt ist.

5. Mitnehmer (10) nach einem der Ansprüche 1 bis 4,
**dadurch gekennzeichnet,**
**dass** der Fügestift (42) entlang der Radialrichtung (R) ein Übermaß aufweist, und aus der Durchgangsöffnung (38) des Schienengleiters (22) herausragt.

6. Mitnehmer (10) nach einem der Ansprüche 1 bis 5,
**dadurch gekennzeichnet,**
**dass** der Fügestift (42) freiendseitig an dem Gleiteinsatz (56) anliegt, wobei eine Vorspannkraft auf den Gleiteinsatz (56) ausgeübt wird.

7. Mitnehmer (10) nach Anspruch 1 bis 6,
**dadurch gekennzeichnet,**
**dass** der Führungsbereich (24) des Schienengleiters (22) zwei angeformte, und zueinander beabstandet angeordnete Führungsklauen (54) aufweist, wobei der Gleiteinsatz (56) zur Verbesserung der Gleiteigenschaften zwischen den Führungsklauen (54) lösbar klipsbefestigt ist.

8. Mitnehmer (10) nach einem der Ansprüche 1 bis 7,
**dadurch gekennzeichnet,**
**dass** die Durchgangsöffnung (38) und die Aufnahme (40) sowie der Fügestift (42) entlang der Axialrichtung (A) etwa mittig an dem Verbindungsabschnitt (36) und an dem Halterabschnitt (32) angeordnet sind.

9. Mitnehmer (10) nach einem der Ansprüche 1 bis 8,
**dadurch gekennzeichnet,**
**dass** der Fügestift (42) die Aufnahme (40) des Verbindungsabschnitts (36) vollständig durchsetzt, und in eine Gegenaufnahme (44) des Halterabschnitts (32) eingreift, welche diametral gegenüberliegend zur Durchgangsöffnung (38) angeordnet ist.

10. Fahrzeugfensterheber (2) zum Verstellen einer Fensterscheibe (4) eines Kraftfahrzeugs, aufweisend einen Stellmotor (6) und eine Stellmechanik (8) sowie einen Mitnehmer (10) nach einem der Ansprüche 1 bis 9.

## Claims

1. Driver (10) for a vehicle window lifter (2), having a pane holder (34) for fastening to a window pane (4), and a rail slider (22) with a guide region (24) as a rail grip for a guide rail (14) of an adjusting mechanism (8) of the vehicle window lifter (2), wherein the pane holder (34) has an approximately cylindrical connecting portion (36), which is inserted along an axial direction (A) into a holder portion (32) of the rail slider (22) and is enclosed by the latter at least in sections along a circumferential direction (U),
**characterized in**
- **that** a sliding insert (56) lies in the guide region (24),
- **that** the connecting portion (36) has a receptacle (40) and the holder portion (32) has a through opening (38), which are arranged in alignment with one another along a radial direction (R), and
- **that** a joining pin (42) is inserted into the through opening (38) and the receptacle (40).

2. Driver (10) according to claim 1,
**characterized in**
**that** the joining pin (42) is made of a rubber-elastic material.

3. Driver (10) according to claim 1 or 2,
**characterized in**
**that** the joining pin (42) is oriented perpendicular to a longitudinal direction of the sliding insert (56).

4. Driver (10) according to one of claims 1 to 3,
**characterized in**
**that** the joining pin (42) is at least partially covered by the sliding insert (56).

5. Driver (10) according to one of claims 1 to 4,
**characterized in**
**that** the joining pin (42) has an oversize along the radial direction (R) and protrudes from the through opening (38) of the rail slider (22).

6. Driver (10) according to one of the claims 1 to 5,
**characterized in**
**that** the joining pin (42) bears against the sliding insert (56) at the free end, wherein a preload force is exerted on the sliding insert (56).

7. Driver (10) according to claim 1 to 6,
**characterized in**
**that** the guide region (24) of the rail slider (22) has two molded and arranged spaced apart from one another guide claws (54), wherein the sliding insert (56) is detachably clip-fastened between the guide claws (54) in order to improve the sliding properties.

8. Driver (10) according to one of claims 1 to 7,
**characterized in**
**that** the through opening (38) and the receptacle (40) as well as the joining pin (42) are arranged along the axial direction (A) approximately centered on the connecting portion (36) and on the holder portion (32).

9. Driver (10) according to one of claims 1 to 8,
**characterized in**
**that** the joining pin (42) completely penetrates the receptacle (40) of the connecting portion (36) and engages in a mating receptacle (44) of the holder portion (32), which is arranged diametrically opposite the through opening (38).

10. Vehicle window lifter (2) for adjusting a window pane (4) of a motor vehicle, having an actuating motor (6) and an actuating mechanism (8) as well as a driver (10) according to one of claims 1 to 9.

## Revendications

1. Entraîneur (10) pour un lève-vitre de véhicule (2), comprenant un support de vitre (34) pour être fixé à une vitre de fenêtre (4), et un coulisseau de rail (22) avec une zone de guidage (24) servant de prise de rail pour un rail de guidage (14) d'un mécanisme de réglage (8) du lève-vitre de véhicule (2), dans lequel le support de vitre (34) comprend une partie de raccordement (36) approximativement cylindrique, qui est insérée le long d'une direction axiale (A) dans une partie de support (32) du coulisseau de rail (22) et est entourée par celui-ci au moins par sections le long d'une direction circonférentielle (U),
**caractérisé en ce**
- **qu'**un insert coulissant (56) est logé dans la zone de guidage (24),
- **que** la partie de raccordement (36) comprend un réceptacle (40) et la partie de support (32) comprend une ouverture traversante (38), qui sont disposées en alignement l'une avec l'autre le long d'une direction radiale (R), et
- **qu'**une broche de jonction (42) est insérée dans l'ouverture traversante (38) et le réceptacle (40).

2. Entraîneur (10) selon la revendication 1,
**caractérisé en ce**
**que** la broche de jonction (42) est formée d'un matériau élastique en caoutchouc.

3. Entraîneur (10) selon la revendication 1 ou 2,
**caractérisé en ce**
**que** la broche de jonction (42) est orientée perpendiculairement à une direction longitudinale de l'insert coulissant (56).

4. Entraîneur (10) selon l'une des revendications 1 à 3,
**caractérisé en ce**
**que** la broche de jonction (42) est au moins partiellement recouverte par l'insert coulissant (56).

5. Entraîneur (10) selon l'une des revendications 1 à 4,
**caractérisé en ce**
**que** la broche de jonction (42) a une surdimension le long de la direction radiale (R) et fait saillie de l'ouverture traversante (38) du coulisseau de rail (22).

6. Entraîneur (10) selon l'une des revendications 1 à 5,
**caractérisé en ce**
**que** la broche de jonction (42) s'appuie à l'extrémité libre contre l'insert coulissant (56), dans lequel une force de précontrainte est exercée sur l'insert coulissant (56).

7. Entraîneur (10) selon les revendications 1 à 6,
**caractérisé en ce**
**que** la zone de guidage (24) du coulisseau de rail (22) comprend deux griffes de guidage (54) moulées et disposées à distance l'une de l'autre, dans lequel l'insert coulissant (56) est fixé par clipsage de manière amovible entre les griffes de guidage (54) afin d'améliorer les propriétés de glissement.

8. Entraîneur (10) selon l'une des revendications 1 à 7,
**caractérisé en ce**
**que** l'ouverture traversante (38) et le réceptacle (40) ainsi que la broche de jonction (42) sont disposés le long de la direction axiale (A) approximativement au centre de la partie de raccordement (36) et de la partie de support (32).

9. Entraîneur (10) selon l'une des revendications 1 à 8,
**caractérisé en ce**
**que** la broche de jonction (42) pénètre complètement le réceptacle (40) de la partie de raccordement (36) et s'engage dans un réceptacle complémentaire (44) de la partie de support (32), qui est disposée diamétralement opposée à l'ouverture traversante (38).

10. Lève-vitre de véhicule (2) pour le réglage d'une vitre (4) d'un véhicule automobile, comprenant un moteur d'actionnement (6) et un mécanisme d'actionnement (8) ainsi qu'un entraîneur (10) selon l'une des revendications 1 à 9.
